# EUROPEAN PATENT APPLICATION

(11) **EP 4 447 516 A1**
(43) Date of publication of application: **16.10.2024**
(21) Application number: 22903438.4
(22) Date of filing: 06.12.2022
(51) Int. Cl.: H04W 16/18, H04W 16/22, H04W 24/02

(54) **MODEL CONFIGURATION METHOD AND APPARATUS, AND COMMUNICATION DEVICE**

(30) Priority: 07.12.2021 CN 202111488750
(71) Applicant: VIVO MOBILE COMMUNICATION CO., LTD., Dongguan, Guangdong 523863 (CN)
(72) Inventor: SUN, Bule, Dongguan, Guangdong 523863 (CN)
(74) Representative: Lavoix
(86) International application number: PCT/CN2022/136847
(87) International publication number: WO 2023/104016

(57) **Abstract**

This application relates to the field of communications, and discloses a model configuration method and apparatus and a communication device. The model configuration method in embodiments of this application includes: A first device acquires model demand information and/or device state information of a second device. The first device determines at least one first model corresponding to the model demand information and/or the device state information. The first device sends a first message to the second device, where the first message includes related information of the at least one first model, or the first message is used for notifying the second device that no model is applicable to the model demand information and/or the device state information.

## Description

### CROSS-REFERENCE TO RELATED APPLICATIONS

This application claims priority to Chinese Patent Application No. 202111488750.4 filed on December 7, 2021, which is incorporated herein by reference in its entirety.

### TECHNICAL FIELD

This application relates to the field of communication technologies, and more specifically, to a model configuration method and apparatus and a communication device.

### BACKGROUND

With the rapid development of artificial intelligence (Artificial Intelligence, AI), AI has been widely applied in various fields.

For the field of communications, running of an AI module may be deployed on any communication device (for example, a terminal side or a network side). However, the AI model running on the communication device may fail to adapt due to movement of the communication device, a change in a wireless environment that the communication device is in, a change in an execution service, or the like, affecting performance of wireless communication.

### SUMMARY

Embodiments of this application provide a model configuration method and apparatus and a communication device, which can ensure adaptability of an AI model running on a communication device and ensure performance of wireless communication.

According to a first aspect, a model configuration method is provided, including: A first device acquires model demand information and/or device state information of a second device. The first device determines at least one first model corresponding to the model demand information and/or the device state information. The first device sends a first message to the second device, where the first message includes related information of the at least one first model, or the first message is used for notifying the second device that no model is applicable to the model demand information and/or the device state information.

According to a second aspect, a model configuration method is provided, including: A second device receives a first message sent by a first device, where the first message includes related information of at least one first model, or the first message is used for notifying the second device that no model is applicable to model demand information and/or device state information, and the at least one first model is determined by the first device based on model demand information of the second device and/or device state information of the second device. The second device performs a model deployment and/or a model update based on the related information of the at least one first model.

According to a third aspect, a model configuration apparatus is provided, used in a first device, and the apparatus including: a first transmission module, configured to acquire model demand information and/or device state information of a second device; and a determining module, configured to determine at least one first model corresponding to the model demand information and/or the device state information, the first transmission module being further configured to send a first message to the second device, where the first message includes related information of the at least one first model, or the first message is used for notifying the second device that no model is applicable to the model demand information and/or the device state information.

According to a fourth aspect, a model configuration apparatus is provided, used in a second device, and the apparatus including: a second transmission module, configured to receive a first message sent by a first device, where the first message includes related information of at least one first model, or the first message is used for notifying the second device that no model is applicable to model demand information and/or device state information, and the at least one first model is determined by the first device based on model demand information of the second device and/or device state information of the second device; and a processing module, configured to perform a model deployment and/or a model update based on the related information of the at least one first model.

According to a fifth aspect, a communication device is provided. The communication device includes a processor and a memory. The memory stores a program or instructions executable on the processor. The program or instructions, when being executed by the processor, implement the steps of the method according to the first aspect, or implement the steps of the method according to the second aspect.

According to a sixth aspect, a communication device is provided, including a processor and a communication interface. The communication interface is coupled to the processor. The processor is configured to run a program or instructions to implement the steps of the method according to the first aspect, or implement the steps of the method according to the second aspect.

According to a seventh aspect, a computer storage medium is provided. The computer storage medium stores a program or instructions. The program or instructions, when being executed by a processor implement the steps of the method according to the first aspect, or implement the steps of the method according to the second aspect.

According to an eighth aspect, a chip is provided. The chip includes a processor and a communication interface. The communication interface is coupled to the processor. The processor is configured to run a program or instructions to implement the steps of the method according to the first aspect, or implement the steps of the method according to the second aspect.

According to a ninth aspect, a computer program product/program product is provided. The computer program/program product is stored in a storage medium. The computer program/program product, when being executed by at least one processor, implements the steps of the method according to the first aspect, or implements the steps of the method according to the second aspect.

In the embodiments of this application, a first device determines at least one first model corresponding to model demand information and/or device state information of a second device, and delivers the at least one first model to the second device. In this way, a model running on the second device can adapt to the model demand information and/or the device state information of the second device, thereby ensuring performance of wireless communication.

### BRIEF DESCRIPTION OF THE DRAWINGS

FIG. 1 is a schematic structural diagram of a wireless communication system according to an example embodiment of this application;
FIG. 2 is a schematic flowchart 1 of a model configuration method according to an example embodiment of this application;
FIG. 3 is a schematic flowchart 2 of a model configuration method according to an example embodiment of this application;
FIG. 4a is a schematic flowchart 1 of interaction of a model configuration method according to an example embodiment of this application;
FIG. 4b is a schematic flowchart 2 of interaction of a model configuration method according to an example embodiment of this application;
FIG. 5 is a schematic flowchart 3 of a model configuration method according to an example embodiment of this application;
FIG. 6 is a schematic structural diagram of a model configuration apparatus according to an example embodiment of this application;
FIG. 7 is a schematic structural diagram of a model configuration apparatus according to an example embodiment of this application;
FIG. 8 is a schematic structural diagram of a communication device according to an example embodiment of this application;
FIG. 9 is a schematic structural diagram of a terminal according to an example embodiment of this application; and
FIG. 10 is a schematic structural diagram of a network-side device according to an example embodiment of this application.

### DETAILED DESCRIPTION

The technical solutions in embodiments of this application are clearly described in the following with reference to the accompanying drawings in the embodiments of this application. Apparently, the described embodiments are some rather than all of the embodiments of this application. All other embodiments obtained by a person of ordinary skill in the art based on the embodiments of this application fall within the scope of protection of this application.

The specification and claims of this application, and terms "first" and "second" are used to distinguish similar objects, but are not used to describe a specific sequence or order. It should be understood that the terms so used are interchangeable, where appropriate, so that embodiments of this application can be implemented in an order other than those illustrated or described herein, and that the objects distinguished by "first" and "second" are generally of one type and do not limit the number of objects. For example, one or more first objects may be provided. In addition, "and/or" in the description and the claims means at least one of the connected objects. The character "/" in this specification generally indicates an "or" relationship between the associated objects.

It should be noted that the technologies described in the embodiments of this application are not limited to being used in a long term evolution (Long Term Evolution, LTE)/LTE-advanced (LTE-Advanced, LTE-A) system, and may further be used in another wireless communication system, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application are often used interchangeably, and the described technologies may be used in the systems and radio technologies described above, and may be used in other systems and radio technologies. The following description describes a new radio (New Radio, NR) system as an example, and NR terms are used in most of the descriptions below. However, these technologies may also be applied to applications such as a 6^{th} generation (6^{th} Generation, 6G) communication system other than an NR system application.

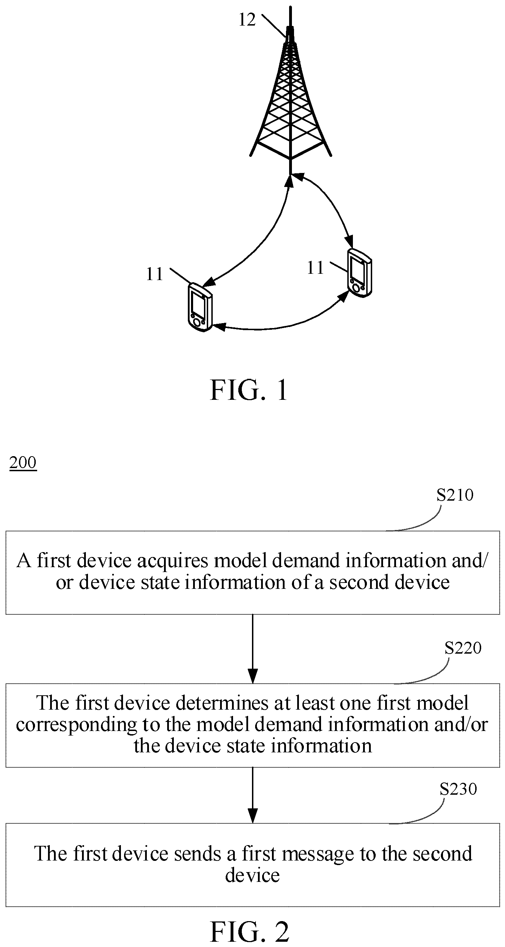

FIG. 1 is a block diagram of a wireless communication system to which embodiments of this application are applicable. The wireless communication system includes a terminal 11 and a network-side device 12. The terminal 11 may be a terminal-side device, for example, a mobile phone, a tablet personal computer (Tablet Personal Computer), a laptop computer (Laptop Computer) or referred to as a notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart home (home devices such as a refrigerator, a television, a washing machine, furniture, and the like with wireless communication functions), a video game console, a personal computer (personal computer, PC), or such as an automated teller machine, a self-service machine, or the like. The wearable device includes a smart watch, a smart band, smart earphones, smart glasses, smart jewelry (a smart bracelet, a smart hand bangle, a smart ring, a smart necklace, a smart ankle bangle, a smart anklet, or the like), a smart wristband, smart clothing, and the like. It needs to be noted that, in the embodiments of this application, a specific type of the terminal 11 is not limited. The network-side device 12 may include an access network device or a core network device. The access network device 12 may also be referred to as a radio access network device, a radio access network (Radio Access Network, RAN), a radio access network function or a radio access network unit. The access network device 12 may include a base station, a WLAN access point, a Wi-Fi node, and the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the field. Provided that the same technical effects are achieved, the base station is not limited to a specific technical term. It needs to be noted that, in the embodiments of this application, only a base station in an NR system is used as an example for description, and a specific type of the base station is not limited.

The technical solutions according to the embodiments of this application are described below in detail with reference to the accompanying drawings through some embodiments and application scenarios thereof.

FIG. 2 is a schematic flowchart of a model configuration method 200 according to an example embodiment of this application. The method 200 may be performed by, but not limited to, a first device (for example, a terminal or a network-side device), and may be specifically performed by hardware and/or software installed on the first device. In this embodiment, the method may include at least the following steps.

S210: The first device acquires model demand information and/or device state information of a second device.

In this embodiment, the first device is used as a model storage side, and the second device is used as a model running side. Therefore, in a case that the second device has moved, a wireless environment that the second device is in has changed, an executed service has changed, or the like, the first device may provide model information to the second device based on the acquired model demand information and/or device state information of the second device. In this way, adaptability of an AI model running on the second device can be ensured, thereby ensuring performance of wireless communication.

Certainly, according to different communication scenarios, the second device may include a terminal or a network-side device, and the first device may include a terminal or a network-side device. That is, the first device and the second device may both be terminals. Alternatively, the first device and the second device may both be network-side devices. Alternatively, the first device is a network-side device, and the second device is a terminal. Alternatively, the first device is a terminal, and the second device is a network-side device. This is not limited herein.

Optionally, the model demand information of the second device may include, but not limited to, at least one of the following (101) to (114).

(101) At least one of a model use, a model function, a model input/output physical quantity, and a reference point corresponding to a model input/output required by the second device.

The model use may be channel estimation, signal detection, gesture recognition, device positioning, or the like. Correspondingly, the model function may also be channel estimation, signal detection, gesture recognition, device positioning, or the like.

The model input/output physical quantity may be an error value, an accuracy rate, a signal-to-noise ratio, or the like. This is not limited herein.

The reference point corresponding to the model input/output represents a corresponding position of an input or output of a model in a signal processing procedure of a communication system.

(102) A model input/output dimension required by the second device.

For example, the model input/output dimension may be one-dimensional data or two-dimensional data or the like. This is not limited herein.

(103) A model input/output format required by the second device.

The model input/output format may be classified according to a data type, a data dimension, a file format, or the like. For example, if classified according to a data type, the model input/output format includes, but not limited to, floating-point data, fixed-point data, and the like. If classified according to a data dimension, in this case, the model input/output format includes, but not limited to, a row vector of M rows, a matrix of M rows and N columns, a tensor of M rows, N columns, and P channels, and the like. If classified according to a file format, in this case, the model input/output format includes, but not limited to, a text format (that is, a txt format), a MATLAB file format (that is, a mat format), an Excel table file format (that is, an xls format or an xlsx format), a dat format, an XML format, a JSON format, a CSV format, an HTML format, a latex format, a sql format, and the like.

(104) Model performance required by the second device.

The model performance may be performance required to solve a problem in a specific application scenario; or model performance during training by a model provider.

It may be understood that according to different application scenarios of the model, indicators corresponding to the model performance may also be different. For example, the model performance may include, but not limited to, error class performance, precision class performance, efficiency class performance, and the like. The error class performance includes, but not limited to, an error, a mean square error, a normalized mean square error, a bit error rate (Bit Error Rate, BER), a block error rate (Block Error Rate, BLER), and a recall rate. The precision class performance includes, but not limited to, an accuracy rate, and a cosine similarity. The efficiency class performance includes, but not limited to, spectral efficiency, energy efficiency, a signal-to-interference-plus-noise ratio, and a signal-to-noise ratio.

(105) A model execution time required by the second device.

The model execution time may be, but not limited to, an average response time, a 95% response time, a maximum execution time, and the like of a model.

(106) An expected model use time of the second device.

The model use time may be a time interval between a model requesting and sending time/model delivery time (for example, a sending time of a subsequent first message) and a use time, which may be classified into different time urgency degrees including a long time, a medium time, a short time, and the like; or may be a time after which the model is to be used given with an air interface transmission time interval (Transmission Time Interval, TTI) or a subframe as a minimum time unit; or an expected use time of the model given in an absolute time mode (for example, 2021-11-2 11:00). This is not limited herein.

(107) A model delivery mode required by the second device.

The model delivery mode may include a full model delivery mode or an incremental model delivery mode. The full model delivery mode means that the first device delivers complete model information to the second device. The incremental model delivery mode means that the first device delivers partial information of a model to the second device. The second device performs an incremental update based on an existing model.

(108) A computing capability description of a model required by the second device.

The computing capability description is used for describing model information of a model, model use related information, or the like, for example, which model supports use on which CPU, or GPU, or NPU, or special-purpose processor, or special-purpose chip model.

(109) A model type required by the second device.

The model type may include, but not limited to, a support vector machine (Support Vector Machine, SVM), a random forest, a fully-connected neural network, a convolutional neural network, a recurrent neural network, a generative adversarial network (Generative Adversarial Network, GAN), an autocoder, and the like.

(110) An execution framework of a model required by the second device.

The execution framework may be, but not limited to, TensorFlow, PyTorch, Keras, MXNet, Caffe2, and the like.

(111) A model size required by the second device.

The model size is a storage size of an AI model required by the second device, or the like. This is not limited herein.

(112) A storage demand of the second device.

The storage demand may be a buffer/memory demand, for example, a size of a remaining usable storage space on the second device.

(113) A trimming data quantity of a model required by the second device.

(114) A quantity of times of trimming update of a model required by the second device.

Correspondingly, the device state information of the second device may include, but not limited to, at least one of the following (21) to (24).

(21) A working mode of the second device.

The working mode of the second device may be that the second device works independently, works collaboratively, or the like.

(22) An environment that the second device is in.

The environment that the second device is in may be that the second device is in an indoor environment, an outdoor environment, a low-speed environment, a high-speed environment, a LOS (Line-Of-Sight) environment, an NLOS (Non-Line-Of-Sight), or the like.

(23) Computing capability information of the second device.

The computing capability information of the second device may be a CPU model in the second device, a memory size of the second device, a utilization of model related resources in the second device, or the like.

(24) Mobility information of the second device.

The mobility information of the second device may be whether the second device has moved, a movement speed of the second device, a movement speed range of the second device, an acceleration of the second device during movement, or the like.

It is to be noted that, the information that the foregoing model demand information and device state information specifically includes may be agreed in a protocol, configured by a higher layer, or configured on a network side. This is not limited herein.

S220: The first device determines at least one first model corresponding to the model demand information and/or the device state information.

S230: The first device sends a first message to the second device.

For S220 and S230, the first device may select, from all usable models, a model, that is, the at least one first model, matching the model demand information and/or the device state information, and deliver the at least one first model to the second device through the first message, that is, the first message includes related information of the at least one first model.

Certainly, if the first device fails to select the first model corresponding to the model demand information and/or the device state information, in this case, the first device may notify the second device through the first message that no model is applicable to the model demand information and/or the device state information. In this case, when receiving the first message, the second device may maintain or keep an original model, and does not perform a model update.

Further, as a possible implementation, a transmission mode of the first message may include, but not limited to, a media access control-control element (Media Access Control-Control Element, MAC CE), a radio resource control (Radio Resource Control, RRC) message, a non access stratum (Non Access Stratum, NAS) message, a management orchestration message, user plane data (for example, a logic channel, or a data radio bearer (Data Radio Bearer, DRB) or a protocol data unit session (Protocol Data Unit session, PDU session)), downlink control information (Downlink Control Information, DCI), a system information block (System Information Block, SIB), physical downlink control channel (Physical downlink control channel, PDCCH) layer (Layer) 1 signaling, physical downlink shared channel (Physical downlink shared channel, PDSCH) information, physical random access channel (Physical Random Access Channel, PRACH) message (Message, MSG) 2 information, PRACH MSG 4 information, PRACH MSG B information, Xn interface signaling, PC5 interface signaling, physical sidelink control channel (Physical SideLink Control Channel, PSCCH) information, physical sidelink shared channel (Physical SideLink Shared Channel, PSSCH) information, physical sidelink broadcast channel (Physical SideLink Broadcast Channel, PSBCH) information, physical sidelink discovery channel (Physical Sidelink Discovery Channel, PSDCH) information, physical sidelink feedback channel (Physical SideLink Feedback Channel, PSFCH) information, and the like.

In this embodiment, a first device determines at least one first model corresponding to model demand information and/or device state information of a second device, and delivers the at least one first model to the second device. In this way, upgrade and evolution of a model on the second device are implemented, and a model running on the second device can adapt to the model demand information and/or the device state information of the second device, thereby ensuring performance of wireless communication.

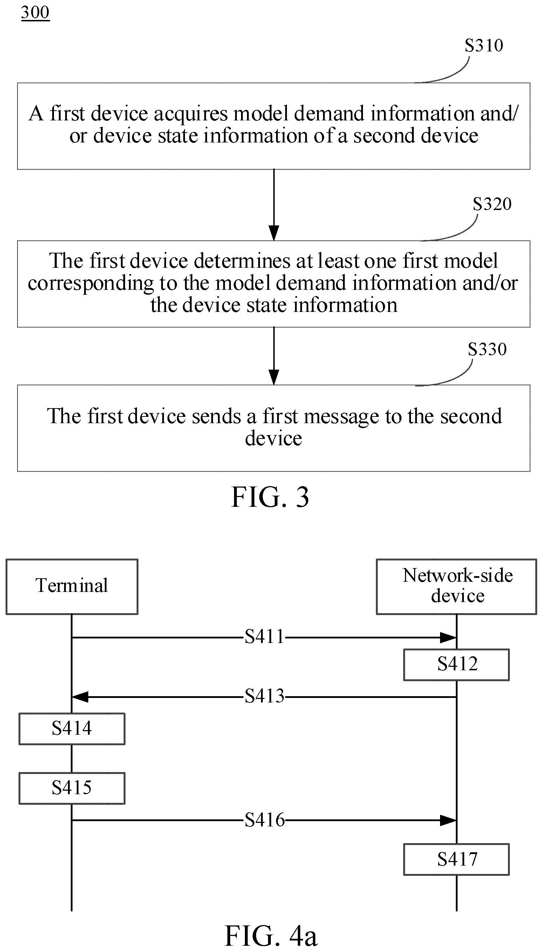

FIG. 3 is a schematic flowchart of a model configuration method 300 according to an example embodiment of this application. The method 300 may be performed by, but not limited to, a first device (for example, a terminal or a network-side device), and may be specifically performed by hardware and/or software installed on the first device. In this embodiment, the method 300 may include at least the following steps.

S310: The first device acquires model demand information and/or device state information of a second device.

It may be understood that, for an implementation process of S310, refer to the related description in the method embodiment 200, and in addition, as a possible implementation, an acquisition mode of acquiring the model demand information of the second device and/or the device state information by the first device may include the following Mode 1 or Mode 2. Content is as follows.

Mode 1: The first device may receive the model demand information and/or the device state information sent by the second device. That is, the model demand information of the second device and/or the device state information may be reported by the second device to the first device.

In an implementation, a procedure of reporting the model demand information and/or the device state information by the second device may be triggered by an event or triggered by a condition, for example, as described in the following Example 1 and Example 2.

Example 1: The second device reports the model demand information and/or the device state information to the first device in a case that a second condition is met.

The second condition may include, but not limited to, at least one of the following (31) to (38).

(31) A performance degradation of a third model exceeds a first threshold.

The third model mentioned in this application is a model currently used by the second device or a model running on the second device. A type of the third model is not limited herein.

In addition, the first threshold, a subsequent second threshold, and the like may all be agreed in a protocol, configured on a network side, or configured by a higher layer. This is not limited herein.

(32) A use time of a third model exceeds a second threshold.

(33) The working mode of the second device has changed.

For example, the second device is switched from working independently to working collaboratively, the second device is switched from working collaboratively to working independently, or the like. This is not limited herein.

(34) A wireless environment of the second device has changed.

For example, the second device is handed over from a 5G cell to a 6G cell, or, the second device is switched from a single-connectivity mode to a dual connectivity mode, or, the wireless environment that the second device is in degrades or the like.

(35) The second device has accessed a network.

For example, the second device camps on a new cell, or the like.

(36) A cell handover of the second device occurs.

For example, the second device is switched from a cell A to a cell B, or the like.

(37) A function or service related to a third model encounters a failure.

(38) The second device receives indication information sent by the first device, where the indication information indicates the model deployment and/or the model update to the second device.

Example 2: The second device reports the model demand information and/or the device state to the first device in a case that a second condition is met and channel quality between the second device and the first device meets a third condition.

For a related description of the second condition, refer to related content in the foregoing description. To avoid repetition, details are not described herein again.

In addition, the third condition is determined based on a parameter used for representing the channel quality. For example, if the parameter representing the channel quality is a reference signal received power (Reference Signal Received Power, RSRP), the third condition may be whether the RSRP is greater than a predetermined value. If the RSRP is greater than the predetermined value, it is determined that the channel quality meets the third condition. If the RSRP is less than or equal to the predetermined value, it is determined that the channel quality does not meet the third condition.

Certainly, actual content of the second condition and the third condition may be agreed in a protocol, configured by a higher layer, or configured on a network side. This is not limited herein.

In addition, when the second device reports the model demand information and/or the device state information, the transmission mode of the model demand information and/or the device state information may include, but not limited to, a MAC CE, an RRC message, a NAS message, physical uplink control channel (Physical Uplink Control Channel, PUCCH) layer 1 signaling, PRACH MSG 1 information, PRACH MSG 3 information, PRACH MSG A information, physical uplink shared channel (Physical Uplink Shared Channel, PUSCH) information, Xn interface signaling, PC5 interface signaling, PSCCH information, PSSCH information, PSBCH information, PSDCH information, PSFCH information, and the like.

Mode 2: The first device acquires the model demand information and/or the device state information through detection or perception of the first device.

A process in which the first device acquires the model demand information and/or the device state information through detection or perception of the first device may include, but not limited to: performing, by the first device, estimation detection based on a pilot signal sent by the second device, performing, by the first device, perception based on a reflected signal or an echo signal of the second device, performing, by the first device, perception based on a reflected signal or an echo signal of the first device, and the like.

S320: The first device determines at least one first model corresponding to the model demand information and/or the device state information.

For an implementation process of S320, refer to the related description of the method embodiment 200. To avoid repetition, details are not described herein again.

S330: The first device sends a first message to the second device.

The first message includes related information of the at least one first model, or the first message is used for notifying the second device that no model is applicable to the model demand information and/or the device state information.

It may be understood that, for an implementation process of S330, refer to the related description in the method embodiment 200, and in addition, as a possible implementation, the first device may send the first message to the second device in a case that channel quality between the second device and the first device meets a first condition.

Similar to the third condition, the first condition is also determined based on the parameter used for representing the channel quality. For example, if the parameter representing the channel quality is an RSRP, the first condition may be whether the RSRP is greater than a predetermined value. If the RSRP is greater than the predetermined value, it is determined that the channel quality meets the first condition. If the RSRP is less than or equal to the predetermined value, it is determined that the channel quality does not meet the third condition.

In addition, actual content of the first condition may be agreed in a protocol, configured by a higher layer, or configured on a network side. This is not limited herein.

Correspondingly, after the step of sending, by the first device, the first message to the second device, the second device may perform a model deployment and/or a model update based on the related information of the at least one first model included in the received first message.

The second device may perform the model deployment or update in various modes. For example, the second device may directly perform the model update or deployment based on the related information of the at least one first model, or may first verify the at least one first model (corresponding to the related information of the at least one first model) and perform the model update or deployment based on a verification result. In this way, model performance can be further ensured.

Based on this, assuming that the second device performs the model update or deployment based on the verification result, the mode in which the second device verifies the at least one first model may include any one of the following (41) to (44).

(41) The second device verifies the at least one first model based on verification data, to obtain the model verification result of each first model.

It may be understood that, in (41), each first model is directly verified through the verification data.

In an implementation, the model verification result mentioned in the embodiments of this application may include, but not limited to, at least one of the following (411) to (414).

(411) Performance of the first model.

The performance of the first model is model performance obtained after the second device uses the first model, and may include, but not limited to, error class performance, precision class performance, efficiency class performance, and the like. The error class performance includes, but not limited to, an error, a mean square error, a normalized mean square error, a bit error rate, a block error rate, and a recall rate. The precision class performance includes, but not limited to, an accuracy rate, and a cosine similarity. The efficiency class performance includes, but not limited to, spectral efficiency, energy efficiency, a signal-to-interference-plus-noise ratio, a signal-to-noise ratio, and the like.

(412) An execution time class result of the first model.

The execution time class result of the first model includes, but not limited to, an average execution time, a maximum execution time, a minimum execution time, a 95% execution time, and the like.

(413) A power consumption class result of the first model.

The power consumption class result of the first model may include, but not limited to, average power consumption, maximum power consumption, minimum power consumption, 95% power consumption, or the like.

(414) A storage overhead class result of the first model.

The storage overhead class result of the first model may include, but not limited to, average memory, maximum memory, minimum memory, 95% memory, average buffer, maximum buffer, minimum buffer, 95% buffer, and the like.

(42) The second device preprocesses verification data, and verifies the at least one first model based on the preprocessed verification data, to obtain the model verification result of each first model.

A mode of the preprocessing includes, but not limited to, normalization, upsampling, downsampling, and the like.

(43) The second device trims the at least one first model, and verifies the trimmed at least one first model based on verification data, to obtain the model verification result of each first model.

(44) The second device preprocesses verification data, trims the at least one first model, and verifies the trimmed at least one first model based on the preprocessed verification data, to obtain the model verification result of each first model.

For a mode of preprocessing the verification data and a mode of trimming the first model, refer to related descriptions in the foregoing (42) and (43). To avoid repetition, this is not limited herein.

Based on this, as an implementation, the second device may determine, based on the verification result, whether to perform the model deployment and/or the model update based on the related information of the at least one first model; and report a model deployment or update result to the first device.

Correspondingly, after receiving the model deployment or update result reported by the second device, the first device may record the model deployment or update result, to facilitate subsequent model configuration.

The model deployment or update result includes at least one of the following (51) to (53).

(51) Whether the second device has performed the model deployment or update.

(52) Related information of a second model, where the second model is a model used by the second device to perform the model deployment or update, and the second model belongs to the at least one first model.

(53) The model verification result. The model verification result is, for example, performance of each first model.

As another implementation, the second device may report the model verification result to the first device, and the first device determines, based on the model verification result, a model and a use strategy that the second device is to use, that is, model deployment or update decision information, and delivers the model deployment or update decision information to the first device. The second device performs the model deployment or the model update based on the received model deployment or update decision information.

It is to be noted that, to ensure consistency of information, after performing the model deployment or the model update based on the model deployment or update decision information, the second device may send a determining message to the first device, to notify the first device, and the second device performs the model deployment or the model update based on the model deployment or update decision information.

In addition, the foregoing transmission mode of the model verification result and the model deployment or update result is similar to the transmission mode of the model demand information and the device state information. For example, the model verification result may also be transmitted through any one of the following: a MAC CE, an RRC message, a NAS message, PUCCH layer 1 signaling, PRACH MSG 1 information, PRACH MSG 3 information, PRACH MSG A information, PUSCH information, Xn interface signaling, PC5 interface signaling, PSCCH information, PSSCH information, PSBCH information, PSDCH information, PSFCH information, and the like.

The transmission mode of the foregoing model deployment or update decision information is similar to that of the foregoing first message. For example, the model deployment or update decision information may also be transmitted through any one of the following: a MAC CE, an RRC message, a NAS message, a management orchestration message, user plane data (for example, a logic channel, or a DRB or PDU session), DCI, a SIB, PDCCH layer 1 signaling, PDSCH information, PRACH MSG2 information, PRACH MSG 4 information, PRACH MSG B information, Xn interface signaling, PC5 interface signaling, PSCCH information, PSSCH information, PSBCH information, PSDCH information, PSFCH information, and the like.

In this embodiment, it can be ensured that a model of the second device can be upgraded and evolved, and corresponding states can be adequately recorded on the side of the first device.

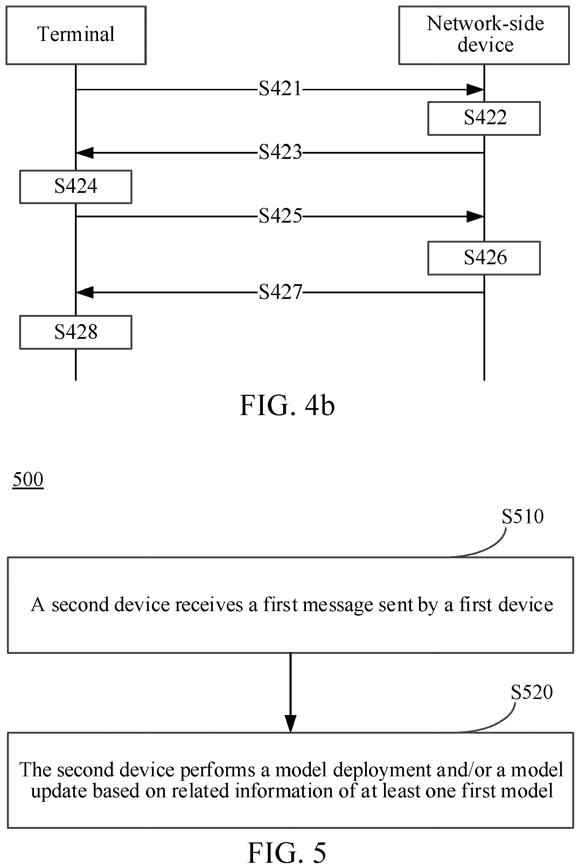

Based on the description of the foregoing method embodiment 200/300, the foregoing model configuration procedure is described below by way of example with reference to FIG. 4a and FIG. 4b. Content is as follows. It is assumed that the first device is a network-side device, and the second device is a terminal.

FIG. 4a is a schematic flowchart of interaction of a model configuration method 400 according to an example of this application. The method 400 may include, but not limited to, the following steps.

S411: The terminal reports model demand information and/or device state information to the network-side device in a case that a second condition is met.

S412: The network-side device determines at least one first model based on the model demand information and/or the device state information.

S413: The network-side device delivers the at least one first model to the second device through a first message.

S414: The terminal verifies the at least one first model, to obtain a model verification result.

S415: The terminal determines, based on the model verification result, whether to perform a model deployment and/or a model update on related information of the at least one first model.

S416: The terminal reports a model deployment or update result to the network-side device.

S417: The network-side device records the model deployment or update result.

FIG. 4b is a schematic flowchart of interaction of a model configuration method 400 according to an example of this application. The method 400 may include, but not limited to, the following steps.

S421: The terminal reports model demand information and/or device state information to the network-side device in a case that a second condition is met.

S422: The network-side device determines at least one first model based on the model demand information and/or the device state information.

S423: The network-side device delivers the at least one first model to the second device through a first message.

S424: The terminal verifies the at least one first model, to obtain a model verification result.

S425: The terminal reports the model verification result to the network-side device.

S426: The network-side device determines model deployment or update decision information based on the model verification result.

S427: The network-side device delivers the model deployment or update decision information to the terminal.

S428: The terminal performs the model deployment or update based on the model deployment or update decision information.

It may be understood that, for implementation processes of the foregoing S411 to S417 and S421 to S428, refer to the foregoing related description of the method embodiments 200 and/or 300, and the same or corresponding technical effects are achieved. To avoid repetition, details are not described herein again.

In addition, the foregoing model configuration method 400 may include, but not limited to, the foregoing S411 to S417 and S421 to S428, for example, may include more or fewer steps than the foregoing S411 to S417 or S421 to S428. This is not limited herein.

FIG. 5 is a schematic flowchart of a model configuration method 500 according to an example embodiment of this application. The method 500 may be performed by, but not limited to, a second device (for example, a terminal or a network-side device), and may be specifically performed by hardware and/or software installed on the second device. In this embodiment, the method 500 may include at least the following steps.

S510: The second device receives a first message sent by a first device.

The first message includes related information of at least one first model, or the first message is used for notifying the second device that no model is applicable to model demand information and/or device state information. The at least one first model is determined by the first device based on model demand information of the second device and/or device state information of the second device.

S520: The second device performs a model deployment and/or a model update based on the related information of the at least one first model.

Optionally, the model demand information includes at least one of the following: at least one of a model use, a model function, a model input/output physical quantity, and a reference point corresponding to a model input/output required by the second device;
a model input/output dimension required by the second device; a model input/output format required by the second device; model performance required by the second device; a model execution time required by the second device; an expected model use time of the second device; a model delivery mode required by the second device; a computing capability description of a model required by the second device; a model type required by the second device; an execution framework of a model required by the second device; a model size required by the second device; a storage demand of the second device; a trimming data quantity of a model required by the second device; and a quantity of times of trimming update of a model required by the second device.

Optionally, the device state information includes at least one of the following: a working mode of the second device; an environment that the second device is in; computing capability information of the second device; and mobility information of the second device.

Optionally, before the step of performing, by the second device, a model deployment and/or a model update based on the related information of the at least one first model, the method further includes: verifying, by the second device, the at least one first model, to obtain a model verification result of each first model.

Optionally, the model verification result includes at least one of the following: performance of the first model; an execution time class result of the first model; a power consumption class result of the first model; and a storage overhead class result of the first model.

Optionally, the step of verifying, by the second device, the at least one first model, to obtain a model verification result of each first model includes any one of the following: verifying, by the second device, the at least one first model based on verification data, to obtain the model verification result of each first model; preprocessing, by the second device, verification data, and verifying the at least one first model based on the preprocessed verification data, to obtain the model verification result of each first model; trimming, by the second device, the at least one first model, and verifying the trimmed at least one first model based on verification data, to obtain the model verification result of each first model; and preprocessing, by the second device, verification data, trimming the at least one first model, and verifying the trimmed at least one first model based on the preprocessed verification data, to obtain the model verification result of each first model.

Optionally, the step of performing, by the second device, a model deployment and/or a model update based on the related information of the at least one first model includes: determining, by the second device based on the verification result, whether to perform the model deployment and/or the model update based on the related information of the at least one first model; and reporting, by the second device, a model deployment or update result to the first device.

Optionally, the model deployment or update result includes at least one of the following: whether the second device has performed the model deployment or update; related information of a second model, where the second model is a model used by the second device to perform the model deployment or update, and the second model belongs to the at least one first model; and the model verification result.

Optionally, the step of performing, by the second device, a model deployment and/or a model update based on the related information of the at least one first model includes: reporting, by the second device, the model verification result to the first device; receiving, by the second device, model deployment or update decision information delivered by the first device, where the model deployment or update decision information is determined by the first device based on the model verification result; and performing, by the second device, the model deployment or the model update based on the model deployment or update decision information.

Optionally, before the step of receiving, by a second device, a first message sent by a first device, the method further includes: reporting, by the second device, the model demand information and/or the device state information to the first device.

Optionally, the step of reporting, by the second device, the model demand information and/or the device state information to the first device includes: reporting, by the second device, the model demand information and/or the device state information to the first device in a case that a second condition is met.

Optionally, the step of reporting, by the second device, the model demand information and/or the device state information to the first device includes: reporting, by the second device, the model demand information and/or the device state to the first device in a case that a second condition is met and channel quality between the second device and the first device meets a third condition.

Optionally, the second condition includes at least one of the following: a performance degradation of a third model exceeds a first threshold; a use time of a third model exceeds a second threshold; the working mode of the second device has changed; a wireless environment of the second device has changed; the second device has accessed a network; a cell handover of the second device occurs; a function or service related to a third model encounters a failure; and the second device receives indication information sent by the first device, where the indication information indicates the model deployment and/or the model update to the second device, where the third model is a model used by the second device.

Optionally, the second device includes a terminal or a network-side device, the first device includes a terminal or a network-side device.

It may be understood that, for implementation processes of implementations in this embodiment, refer to the foregoing related description of the method embodiments 200 to 400, and the same or corresponding technical effects are achieved. To avoid repetition, details are not described herein again.

The model configuration methods provided in the embodiments of this application may be performed by a model configuration apparatus. An example in which the model configuration apparatus performs the model configuration method in the embodiments of this application is used to describe the model configuration apparatus in the embodiments of this application.

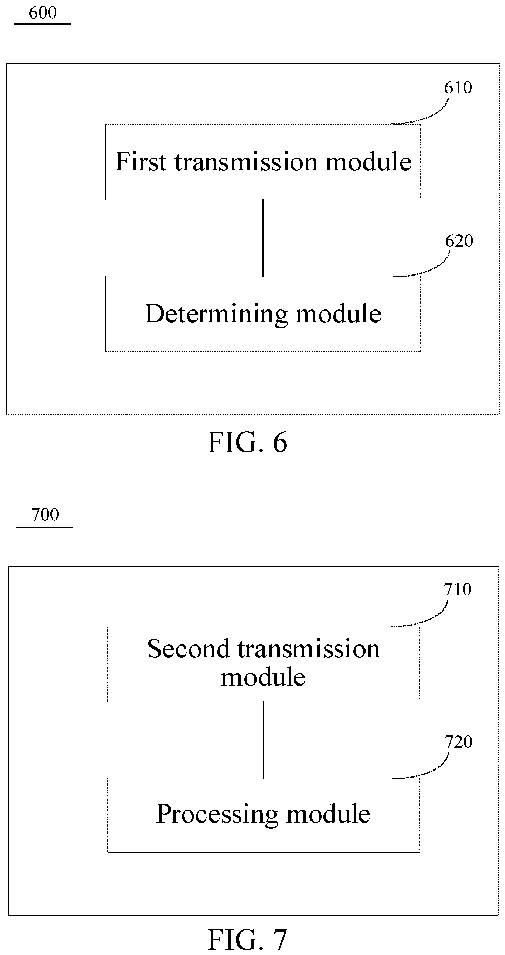

FIG. 6 is a schematic structural diagram of a model configuration apparatus 600 according to an example embodiment of this application. The apparatus includes: a first transmission module 610, configured to acquire model demand information and/or device state information of a second device; and a determining module 620, configured to determine at least one first model corresponding to the model demand information and/or the device state information, the first transmission module 610 being further configured to send a first message to the second device, where the first message includes related information of the at least one first model, or the first message is used for notifying the second device that no model is applicable to the model demand information and/or the device state information.

Optionally, the model demand information includes at least one of the following: at least one of a model use, a model function, a model input/output physical quantity, and a reference point corresponding to a model input/output required by the second device; a model input/output dimension required by the second device; a model input/output format required by the second device; model performance required by the second device; a model execution time required by the second device; an expected model use time of the second device; a model delivery mode required by the second device; a computing capability description of a model required by the second device; a model type required by the second device; an execution framework of a model required by the second device; a model size required by the second device; a storage demand of the second device; a trimming data quantity of a model required by the second device; and a quantity of times of trimming update of a model required by the second device.

Optionally, the device state information includes at least one of the following: a working mode of the second device; an environment that the second device is in; computing capability information of the second device; and mobility information of the second device.

Optionally, the step that the first transmission module 610 acquires the model demand information and/or the device state information includes any one of the following: receiving the model demand information and/or the device state information sent by the second device; and acquiring the model demand information and/or the device state information through detection or perception of the first device.

Optionally, the first transmission module 610 is configured to perform the step of sending the first message to the second device in a case that the channel quality between the second device and the first device meets the first condition.

Optionally, the first transmission module 610 is further configured to: receive a model deployment or update result reported by the second device, and record the model deployment or update result.

Optionally, the model deployment or update result includes at least one of the following: whether the second device has performed a model deployment or update; related information of a second model, where the second model is a model used by the second device to perform the deployment or update, and the second model belongs to the at least one first model; and a model verification result.

Optionally, the first transmission module 610 is further configured to: receive a model verification result reported by the second device; and deliver model deployment or update decision information, where the model deployment or update decision information is determined by the first device based on the model verification result.

Optionally, the second device includes a terminal or a network-side device, the first device includes a terminal or a network-side device.

FIG. 7 is a schematic structural diagram of a model configuration apparatus 700 according to an example embodiment of this application. The apparatus 700 includes: a second transmission module 710, configured to receive a first message sent by a first device, where the first message includes related information of at least one first model, or the first message is used for notifying the second device that no model is applicable to model demand information and/or device state information, and the at least one first model is determined by the first device based on model demand information of the second device and/or device state information of the second device; and a processing module 720, configured to perform a model deployment and/or a model update based on the related information of the at least one first model.

Optionally, the model demand information includes at least one of the following: at least one of a model use, a model function, a model input/output physical quantity, and a reference point corresponding to a model input/output required by the second device; a model input/output dimension required by the second device; a model input/output format required by the second device; model performance required by the second device; a model execution time required by the second device; an expected model use time of the second device; a model delivery mode required by the second device; a computing capability description of a model required by the second device; a model type required by the second device; an execution framework of a model required by the second device; a model size required by the second device; a storage demand of the second device; a trimming data quantity of a model required by the second device; and a quantity of times of trimming update of a model required by the second device.

Optionally, the device state information includes at least one of the following: a working mode of the second device; an environment that the second device is in; computing capability information of the second device; and mobility information of the second device.

Optionally, the processing module 720 is further configured to verify the at least one first model, to obtain a model verification result of each first model.

Optionally, the model verification result includes at least one of the following: performance of the first model; an execution time class result of the first model; a power consumption class result of the first model; and a storage overhead class result of the first model.

Optionally, the step that the processing module 720 verifies the at least one first model, to obtain the model verification result of each first model includes any one of the following: verifying the at least one first model based on verification data, to obtain the model verification result of each first model; preprocessing verification data, and verifying the at least one first model based on the preprocessed verification data, to obtain the model verification result of each first model; trimming the at least one first model, and verifying the trimmed at least one first model based on verification data, to obtain the model verification result of each first model; and preprocessing verification data, trimming the at least one first model, and verifying the trimmed at least one first model based on the preprocessed verification data, to obtain the model verification result of each first model.

Optionally, the step that the processing module 720 performs the model deployment and/or the model update based on the related information of the at least one first model includes: determining, based on the verification result, whether to perform the model deployment and/or the model update based on the related information of the at least one first model; and reporting a model deployment or update result to the first device through the second device 710.

Optionally, the model deployment or update result includes at least one of the following: whether the second device has performed the model deployment or update; related information of a second model, where the second model is a model used by the second device to perform the model deployment or update, and the second model belongs to the at least one first model; and the model verification result.

Optionally, the step that the processing module 720 performs the model deployment and/or the model update based on the related information of the at least one first model includes: reporting the model verification result to the first device; receiving model deployment or update decision information delivered by the first device, where the model deployment or update decision information is determined by the first device based on the model verification result; and performing the model deployment or the model update based on the model deployment or update decision information.

Optionally, the second transmission module 710 is further configured to report the model demand information and/or the device state information to the first device.

Optionally, the second transmission module 710 is configured to report the model demand information and/or the device state information to the first device in a case that a second condition is met.

Optionally, the second transmission module 710 is configured to report the model demand information and/or the device state to the first device in a case that a second condition is met and channel quality between the second device and the first device meets a third condition.

Optionally, the second condition includes at least one of the following: a performance degradation of a third model exceeds a first threshold; a use time of a third model exceeds a second threshold; the working mode of the second device has changed; a wireless environment of the second device has changed; the second device has accessed a network; a cell handover of the second device occurs; a function or service related to a third model encounters a failure; and the second device receives indication information sent by the first device, where the indication information indicates the model deployment and/or the model update to the second device, where the third model is a model used by the second device.

Optionally, the second device includes a terminal or a network-side device, the first device includes a terminal or a network-side device.

The model configuration apparatus 600 or 700 in the embodiments of this application may be a communication device, for example, a communication device with an operating system, or may be a component, for example, an integrated circuit or a chip, in a communication device. The communication device may be a terminal, or may be another device, for example, a network-side device, than a terminal. For example, the terminal may include, but not limited to, the types of the terminal 11 listed above. The another device may be a server, a network attached storage (Network Attached Storage, NAS), or the like. This is not specifically limited in the embodiments of this application.

The model configuration apparatus 600 or 700 in the embodiments of this application can implement various processes implemented in the method embodiments in FIG. 2 to FIG. 5, and the same technical effects are achieved. To avoid repetition, details are not described herein again.

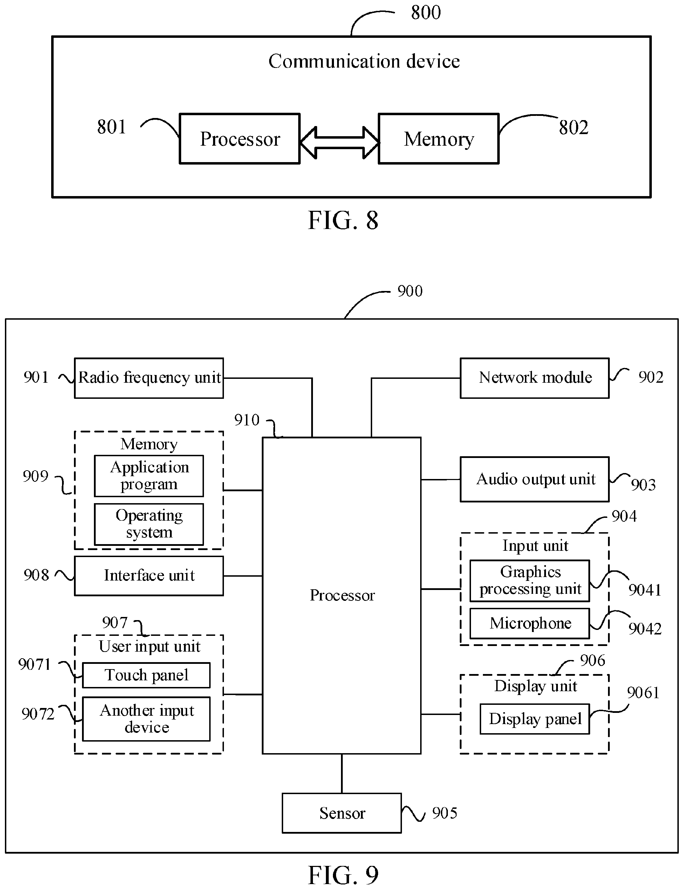

Optionally, as shown in FIG. 8, embodiments of this application further provide a communication device 800, including a processor 801 and a memory 802. The memory 802 stores a program or instructions executable on the processor 801. For example, when the communication device 800 is a terminal, the program or instructions, when being executed by the processor 801, implement the various steps of the foregoing model configuration method embodiments, and can achieve the same technical effects. When the communication device 800 is a network-side device, the program or instructions, when being executed by the processor 801, implement various steps of the foregoing model configuration method embodiments, and can achieve the same technical effects. To avoid repetition, details are not described herein again.

In an implementation, the communication device 800 may be a terminal. For example, FIG. 9 is a schematic diagram of a hardware structure of a terminal that implements the embodiments of this application.

The terminal 900 includes, but is not limited to, at least some components such as a radio frequency unit 901, a network module 902, an audio output unit 903, an input unit 904, a sensor 905, a display unit 906, a user input unit 907, an interface unit 908, a memory 909, and a processor 910.

Persons skilled in the art may understand that, the terminal 900 may further include a power supply (for example, a battery) for supplying power to the components. The power supply may be logically connected to the processor 910 by a power management system, thereby implementing functions such as charging, discharging, and power consumption management through the power management system. The terminal structure shown in FIG. 9 does not constitute a limitation on the terminal, and the terminal may include more or fewer components than shown, or combine some components, or have different component arrangements. Details are not described herein again.

It should be understood that, in the embodiments of this application, the input unit 904 may include a graphics processing unit (Graphics Processing Unit, GPU) 9041 and a microphone 9042. The graphics processing unit 9041 performs processing on image data of a static picture or a video that is obtained by an image acquisition device (for example, a camera) in a video acquisition mode or an image acquisition mode. The display unit 906 may include a display panel 9061. The display panel 9061 may be configured in the form of a liquid crystal display, an organic light-emitting diode, or the like. The user input unit 907 includes at least one of a touch panel 9071 and another input device 9072. The touch panel 9071 is also referred to as a touchscreen. The touch panel 9071 may include two parts: a touch detection apparatus and a touch controller. The another input device 9072 may include, but not limited to, a physical keyboard, a functional key (for example, a volume control key or a switch key), a track ball, a mouse, and a joystick, which are not described herein in detail.

In the embodiments of this application, after receiving downlink data from the network-side device, the radio frequency unit 901 may transmit the downlink data to the processor 910 for processing. In addition, the radio frequency unit 901 may send uplink data to the network-side device. Generally, the radio frequency unit 901 includes, but is not limited to, an antenna, an amplifier, a transceiver, a coupler, a low noise amplifier, a duplexer, and the like.

The memory 909 may be configured to store a software program or instructions and various data. The memory 909 may mainly include a first storage area for storing a program or instructions and a second storage area for storing data. The first storage area may store an operating system, an application program or instructions required by at least one function (for example, a sound playback function and an image display function), and the like. In addition, the memory 909 may include a volatile memory or a non-volatile memory, or the memory 909 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 909 in the embodiments of this application includes, but is not limited to, these memories and any other suitable types.

The processor 910 may include one or more processing units. Optionally, the processor 910 integrates an application processor and a modem processor. The application processor mainly processes operations involving an operating system, a user interface, an application program, and the like. The modem processor mainly processes a wireless communication signal, and is, for example, a baseband processor. It may be understood that, the modem processor may alternatively not be integrated in the processor 910.

In an implementation, the radio frequency unit 901 is configured to acquire model demand information and/or device state information of a second device. The processor 910 is configured to determine at least one first model corresponding to the model demand information and/or the device state information. The radio frequency unit 901 is further configured to send a first message to the second device, where the first message includes related information of the at least one first model, or the first message is used for notifying the second device that no model is applicable to the model demand information and/or the device state information.

Optionally, the model demand information includes at least one of the following: at least one of a model use, a model function, a model input/output physical quantity, and a reference point corresponding to a model input/output required by the second device; a model input/output dimension required by the second device; a model input/output format required by the second device; model performance required by the second device; a model execution time required by the second device; an expected model use time of the second device; a model delivery mode required by the second device; a computing capability description of a model required by the second device; a model type required by the second device; an execution framework of a model required by the second device; a model size required by the second device; a storage demand of the second device; a trimming data quantity of a model required by the second device; and a quantity of times of trimming update of a model required by the second device.

Optionally, the device state information includes at least one of the following: a working mode of the second device; an environment that the second device is in; computing capability information of the second device; and mobility information of the second device.

Optionally, the step that the radio frequency unit 901 acquires the model demand information and/or the device state information includes any one of the following: receiving the model demand information and/or the device state information sent by the second device; and acquiring the model demand information and/or the device state information through detection or perception of the first device.

Optionally, the radio frequency unit 901 is configured to perform the step of sending the first message to the second device in a case that the channel quality between the second device and the first device meets the first condition.

Optionally, the radio frequency unit 901 is further configured to: receive a model deployment or update result reported by the second device, and record the model deployment or update result.

Optionally, the model deployment or update result includes at least one of the following: whether the second device has performed a model deployment or update; related information of a second model, where the second model is a model used by the second device to perform the deployment or update, and the second model belongs to the at least one first model; and a model verification result.

Optionally, the radio frequency unit 901 is further configured to: receive a model verification result reported by the second device; and deliver model deployment or update decision information, where the model deployment or update decision information is determined by the first device based on the model verification result.

In another implementation, the radio frequency unit 901 is configured to receive a first message sent by a first device, where the first message includes related information of at least one first model, and the at least one first model is determined by the first device based on model demand information of the second device and/or device state information of the second device. The processor 910 is configured to perform a model deployment and/or a model update based on the related information of the at least one first model.

Optionally, the model demand information includes at least one of the following: at least one of a model use, a model function, a model input/output physical quantity, and a reference point corresponding to a model input/output required by the second device; a model input/output dimension required by the second device; a model input/output format required by the second device; model performance required by the second device; a model execution time required by the second device; an expected model use time of the second device; a model delivery mode required by the second device; a computing capability description of a model required by the second device; a model type required by the second device; an execution framework of a model required by the second device; a model size required by the second device; a storage demand of the second device; a trimming data quantity of a model required by the second device; and a quantity of times of trimming update of a model required by the second device.

Optionally, the device state information includes at least one of the following: a working mode of the second device; an environment that the second device is in; computing capability information of the second device; and mobility information of the second device.

Optionally, the processor 910 is further configured to verify the at least one first model, to obtain a model verification result of each first model.

Optionally, the model verification result includes at least one of the following: performance of the first model; an execution time class result of the first model; a power consumption class result of the first model; and a storage overhead class result of the first model.

Optionally, the step that the processor 910 verifies the at least one first model, to obtain the model verification result of each first model includes any one of the following: verifying the at least one first model based on verification data, to obtain the model verification result of each first model; preprocessing verification data, and verifying the at least one first model based on the preprocessed verification data, to obtain the model verification result of each first model; trimming the at least one first model, and verifying the trimmed at least one first model based on verification data, to obtain the model verification result of each first model; and preprocessing verification data, trimming the at least one first model, and verifying the trimmed at least one first model based on the preprocessed verification data, to obtain the model verification result of each first model.

Optionally, the step that the processor 910 performs the model deployment and/or the model update based on the related information of the at least one first model includes: determining, based on the verification result, whether to perform the model deployment and/or the model update based on the related information of the at least one first model; and reporting a model deployment or update result to the first device through the radio frequency unit 901.

Optionally, the model deployment or update result includes at least one of the following: whether the second device has performed the model deployment or update; related information of a second model, where the second model is a model used by the second device to perform the model deployment or update, and the second model belongs to the at least one first model; and the model verification result.

Optionally, the step that the processor 910 performs the model deployment and/or the model update based on the related information of the at least one first model includes: reporting the model verification result to the first device; receiving model deployment or update decision information delivered by the first device, where the model deployment or update decision information is determined by the first device based on the model verification result; and performing the model deployment or the model update based on the model deployment or update decision information.

Optionally, the radio frequency unit 901 is further configured to report the model demand information and/or the device state information to the first device.

Optionally, the radio frequency unit 901 is configured to report the model demand information and/or the device state information to the first device in a case that a second condition is met.

Optionally, the radio frequency unit 901 is configured to report the model demand information and/or the device state to the first device in a case that a second condition is met and channel quality between the second device and the first device meets a third condition.

Optionally, the second condition includes at least one of the following: a performance degradation of a third model exceeds a first threshold; a use time of a third model exceeds a second threshold; the working mode of the second device has changed; a wireless environment of the second device has changed; the second device has accessed a network; a cell handover of the second device occurs; a function or service related to a third model encounters a failure; and the second device receives indication information sent by the first device, where the indication information indicates the model deployment and/or the model update to the second device, where the third model is a model used by the second device.

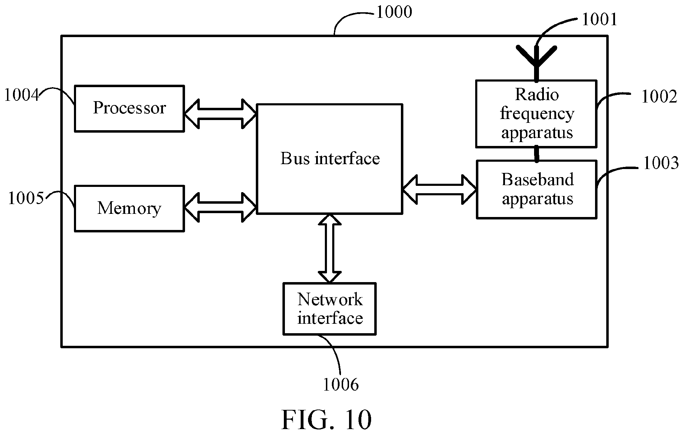

In addition, the communication device 800 may be a network-side device. For example, FIG. 10 is a schematic structural diagram of a network-side device. A network-side device 1000 includes an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information through the antenna 1001, and sends the received information to the baseband apparatus 1003 for processing. In a downlink direction, the baseband apparatus 1003 processes information to be sent, and sends the processed information to the radio frequency apparatus 1002. The radio frequency apparatus 1002 processes the received information and sends the processed information through the antenna 1001.

The method performed by the network-side device in the foregoing embodiments may be implemented in the baseband apparatus 1003. The baseband apparatus 1003 includes a baseband processor.

The baseband apparatus 1003 may include, for example, at least one baseband board. A plurality of chips are disposed on the baseband board, as shown in FIG. 10. One of the chips is, for example, a baseband processor, and is connected to the memory 1005 by a bus interface, to call a program in the memory 1005 to perform operations of a network device shown in the foregoing method embodiments.

The network-side device may further include a network interface 1006. The interface is, for example, a common public radio interface (common public radio interface, CPRI).

Specifically, the network-side device 1000 in the embodiments of this application further includes instructions or a program that are stored in the memory 1005 and executable on the processor 1004. The processor 1004 calls the instructions or program in the memory 1005 to perform the method performed by the modules in FIG. 6 or FIG. 7, and achieve the same technical effects. To avoid repetition, details are not described herein again.

Embodiments of this application further provide a readable storage medium. The readable storage medium stores a program or instructions. The program or instructions, when executed by a processor, implement various processes of the foregoing model configuration method embodiments, and the same technical effects can be achieved. To avoid repetition, details are not described herein again.

The readable storage medium includes a computer-readable storage medium, for example, a computer read-only memory ROM, a random access memory RAM, a magnetic disk, an optical disc, or the like.

Embodiments of this application further provide a chip. The chip includes a processor and a communication interface. The communication interface is coupled to the processor. The processor is configured to run a program or instructions, to implement various processes of the foregoing model configuration method embodiment, and can achieve the same technical effects. To avoid repetition, details are not described herein again.

It should be understood that the chip in the embodiments of this application may also be referred to as a system-level chip, a system chip, a chip system, a system-on-a-chip, or the like.

Embodiments of this application further provide a computer program product. The computer program product includes a processor, a memory, and a program or instructions that are stored in the memory and executable on the processor. The computer program or instructions, when executed by the processor, implement various processes of the foregoing model configuration method embodiments, and can achieve the same technical effects. To avoid repetition, details are not described herein again.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one ..." does not exclude that there are still other same elements in the processes, methods, objects, or apparatuses. In addition, it needs to be noted that the scope of the methods and apparatuses in the implementations of this application is not limited to performing the functions in the order shown or discussed, but may also include performing the functions in a substantially simultaneous manner or in reverse order based on the features involved. For example, the described methods may be performed in a different order than described, and various steps may be added, omitted, or combined. Further, features described with reference to some examples may be combined in other examples.

Through the descriptions of the foregoing implementations, a person skilled in the art may clearly understand that the methods in the foregoing embodiments may be implemented by means of software and a necessary general hardware platform, and certainly, may also be implemented by hardware, but in many cases, the former manner is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A model configuration method, comprising:
acquiring, by a first device, model demand information and/or device state information of a second device;
determining, by the first device, at least one first model corresponding to the model demand information and/or the device state information; and
sending, by the first device, a first message to the second device, wherein the first message comprises related information of the at least one first model, or the first message is used for notifying the second device that no model is applicable to the model demand information and/or the device state information.

2. The method according to claim 1, wherein the model demand information comprises at least one of the following:
at least one of a model use, a model function, a model input/output physical quantity, and a reference point corresponding to a model input/output required by the second device;
a model input/output dimension required by the second device;
a model input/output format required by the second device;
model performance required by the second device;
a model execution time required by the second device;
an expected model use time of the second device;
a model delivery mode required by the second device;
a computing capability description of a model required by the second device;
a model type required by the second device;
an execution framework of a model required by the second device;
a model size required by the second device;
a storage demand of the second device;
a trimming data quantity of a model required by the second device; and
a quantity of times of trimming update of a model required by the second device.

3. The method according to claim 1, wherein the device state information comprises at least one of the following:
a working mode of the second device;
an environment that the second device is in;
computing capability information of the second device; and
mobility information of the second device.

4. The method according to claim 1, wherein the step of acquiring, by a first device, model demand information and/or device state information comprises at least one of the following:
receiving, by the first device, the model demand information and/or the device state information sent by the second device; and
acquiring, by the first device, the model demand information and/or the device state information through detection or perception of the first device.

5. The method according to claim 1, wherein the step of sending, by the first device, a first message to the second device comprises:
sending, by the first device, the first message to the second device in a case that channel quality between the second device and the first device meets a first condition.

6. The method according to claim 1, wherein after the step of sending, by the first device, a first message to the second device, the method further comprises:
receiving, by the first device, a model deployment or update result reported by the second device; and
recording, by the first device, the model deployment or update result.

7. The method according to claim 6, wherein the model deployment or update result comprises at least one of the following:
whether the second device has performed a model deployment or update;
related information of a second model, wherein the second model is a model used by the second device to perform a deployment or an update, and the second model belongs to the at least one first model; and
the model verification result.

8. The method according to claim 1, wherein after the step of sending, by the first device, a first message to the second device, the method further comprises:
receiving, by the first device, a model verification result reported by the second device; and
delivering, by the first device, model deployment or update decision information, wherein the model deployment or update decision information is determined by the first device based on the model verification result.

9. The method according to any one of claims 1 to 8, wherein the second device comprises a terminal or a network-side device, the first device comprises a terminal or a network-side device.

10. A model configuration method, comprising:
receiving, by a second device, a first message sent by a first device, wherein the first message comprises related information of at least one first model, or the first message is used for notifying the second device that no model is applicable to model demand information and/or device state information, and the at least one first model is determined by the first device based on model demand information of the second device and/or device state information of the second device; and
performing, by the second device, a model deployment and/or a model update based on the related information of the at least one first model.

11. The method according to claim 10, wherein the model demand information comprises at least one of the following:
at least one of a model use, a model function, a model input/output physical quantity, and a reference point corresponding to a model input/output required by the second device;
a model input/output dimension required by the second device;
a model input/output format required by the second device;
model performance required by the second device;
a model execution time required by the second device;
an expected model use time of the second device;
a model delivery mode required by the second device;
a computing capability description of a model required by the second device;
a model type required by the second device;
an execution framework of a model required by the second device;
a model size required by the second device;
a storage demand of the second device;
a trimming data quantity of a model required by the second device; and
a quantity of times of trimming update of a model required by the second device.

12. The method according to claim 10, wherein the device state information comprises at least one of the following:
a working mode of the second device;
an environment that the second device is in;
computing capability information of the second device; and
mobility information of the second device.

13. The method according to claim 10, wherein before the step of performing, by the second device, a model deployment and/or a model update based on the related information of the at least one first model, the method further comprises:
verifying, by the second device, the at least one first model, to obtain a model verification result of each first model.

14. The method according to claim 13, wherein the model verification result comprises at least one of the following:
performance of the first model;
an execution time class result of the first model;
a power consumption class result of the first model; and
a storage overhead class result of the first model.

15. The method according to claim 14, wherein the step of verifying, by the second device, the at least one first model, to obtain a model verification result of each first model comprises any one of the following:
verifying, by the second device, the at least one first model based on verification data, to obtain the model verification result of each first model;
preprocessing, by the second device, verification data, and verifying the at least one first model based on the preprocessed verification data, to obtain the model verification result of each first model;
trimming, by the second device, the at least one first model, and verifying the trimmed at least one first model based on verification data, to obtain the model verification result of each first model; and
preprocessing, by the second device, verification data, trimming the at least one first model, and verifying the trimmed at least one first model based on the preprocessed verification data, to obtain the model verification result of each first model.

16. The method according to any one of claims 13 to 15, wherein the step of performing, by the second device, a model deployment and/or a model update based on the related information of the at least one first model comprises:
determining, by the second device based on the verification result, whether to perform the model deployment and/or the model update based on the related information of the at least one first model; and
reporting, by the second device, a model deployment or update result to the first device.

17. The method according to claim 16, wherein the model deployment or update result comprises at least one of the following:
whether the second device has performed the model deployment or update;
related information of a second model, wherein the second model is a model used by the second device to perform the model deployment or update, and the second model belongs to the at least one first model; and
the model verification result.

18. The method according to claim 13 or 15, wherein the step of performing, by the second device, a model deployment and/or a model update based on the related information of the at least one first model comprises:
reporting, by the second device, the model verification result to the first device;
receiving, by the second device, model deployment or update decision information delivered by the first device, wherein the model deployment or update decision information is determined by the first device based on the model verification result; and
performing, by the second device, the model deployment or the model update based on the model deployment or update decision information.

19. The method according to any one of claims 10 to 18, wherein before the step of receiving, by a second device, a first message sent by a first device, the method further comprises:
reporting, by the second device, the model demand information and/or the device state information to the first device.

20. The method according to claim 19, wherein the step of reporting, by the second device, the model demand information and/or the device state information to the first device comprises:
reporting, by the second device, the model demand information and/or the device state information to the first device in a case that a second condition is met.

21. The method according to claim 19, wherein the step of reporting, by the second device, the model demand information and/or the device state information to the first device comprises:
reporting, by the second device, the model demand information and/or the device state to the first device in a case that a second condition is met and channel quality between the second device and the first device meets a third condition.

22. The method according to claim 20 or 21, wherein the second condition comprises at least one of the following:
a performance degradation of a third model exceeds a first threshold;
a use time of a third model exceeds a second threshold;
the working mode of the second device has changed;
a wireless environment of the second device has changed;
the second device has accessed a network;
a cell handover of the second device occurs;
a function or service related to a third model encounters a failure; and
the second device receives indication information sent by the first device, wherein the indication information indicates the model deployment and/or the model update to the second device,
wherein the third model is a model used by the second device.

23. The method according to any one of claims 10 to 22, wherein the second device comprises a terminal or a network-side device, the first device comprises a terminal or a network-side device.

24. A model configuration apparatus, used in a first device, and the apparatus comprising:
a first transmission module, configured to acquire model demand information and/or device state information of a second device; and
a determining module, configured to determine at least one first model corresponding to the model demand information and/or the device state information,
the first transmission module being further configured to send a first message to the second device, wherein the first message comprises related information of the at least one first model, or the first message is used for notifying the second device that no model is applicable to the model demand information and/or the device state information.

25. The apparatus according to claim 24, wherein the model demand information comprises at least one of the following:
at least one of a model use, a model function, a model input/output physical quantity, and a reference point corresponding to a model input/output required by the second device;
a model input/output dimension required by the second device;
a model input/output format required by the second device;
model performance required by the second device;
a model execution time required by the second device;
an expected model use time of the second device;
a model delivery mode required by the second device;
a computing capability description of a model required by the second device;
a model type required by the second device;
an execution framework of a model required by the second device;
a model size required by the second device;
a storage demand of the second device;
a trimming data quantity of a model required by the second device; and
a quantity of times of trimming update of a model required by the second device.

26. The apparatus according to claim 24, wherein the device state information comprises at least one of the following:
a working mode of the second device;
an environment that the second device is in;
computing capability information of the second device; and
mobility information of the second device.

27. The apparatus according to claim 24, wherein the step that the first transmission module acquires the model demand information and/or the device state information comprises any one of the following:
receiving the model demand information and/or the device state information sent by the second device; and
acquiring the model demand information and/or the device state information through detection or perception of the first device.

28. The apparatus according to claim 24, wherein the first transmission module is configured to send the first message to the second device in a case that channel quality between the second device and the first device meets a first condition.

29. The apparatus according to claim 24, wherein the first transmission module is further configured to: receive a model deployment or update result reported by the second device, and record the model deployment or update result.

30. The apparatus according to claim 29, wherein the model deployment or update result comprises at least one of the following:
whether the second device has performed a model deployment or update;
related information of a second model, wherein the second model is a model used by the second device to perform a deployment or an update, and the second model belongs to the at least one first model; and
the model verification result.

31. The apparatus according to claim 24, wherein the first transmission module is further configured to: receive a model verification result reported by the second device; and deliver model deployment or update decision information, wherein the model deployment or update decision information is determined by the first device based on the model verification result.

32. The apparatus according to any one of claims 24 to 31, wherein the second device comprises a terminal or a network-side device, the first device comprises a terminal or a network-side device.

33. A model configuration apparatus, used in a second device, and the apparatus comprising:
a second transmission module, configured to receive a first message sent by a first device, wherein the first message comprises related information of at least one first model, or the first message is used for notifying the second device that no model is applicable to model demand information and/or device state information, and the at least one first model is determined by the first device based on model demand information of the second device and/or device state information of the second device; and
a processing module, configured to perform a model deployment and/or a model update based on the related information of the at least one first model.

34. The apparatus according to claim 33, wherein the model demand information comprises at least one of the following:
at least one of a model use, a model function, a model input/output physical quantity, and a reference point corresponding to a model input/output required by the second device;
a model input/output dimension required by the second device;
a model input/output format required by the second device;
model performance required by the second device;
a model execution time required by the second device;
an expected model use time of the second device;
a model delivery mode required by the second device;
a computing capability description of a model required by the second device;
a model type required by the second device;
an execution framework of a model required by the second device;
a model size required by the second device;
a storage demand of the second device;
a trimming data quantity of a model required by the second device; and
a quantity of times of trimming update of a model required by the second device.

35. The apparatus according to claim 33, wherein the device state information comprises at least one of the following:
a working mode of the second device;
an environment that the second device is in;
computing capability information of the second device; and
mobility information of the second device.

36. The apparatus according to claim 33, wherein the processing module is further configured to verify the at least one first model, to obtain a model verification result of each first model.

37. The apparatus according to claim 36, wherein the model verification result comprises at least one of the following:
performance of the first model;
an execution time class result of the first model;
a power consumption class result of the first model; and
a storage overhead class result of the first model.

38. The apparatus according to claim 37, wherein the step that the processing module verifies the at least one first model, to obtain the model verification result of each first model comprises any one of the following:
verifying the at least one first model based on verification data, to obtain the model verification result of each first model;
preprocessing verification data, and verifying the at least one first model based on the preprocessed verification data, to obtain the model verification result of each first model;
trimming the at least one first model, and verifying the trimmed at least one first model based on verification data, to obtain the model verification result of each first model; and
preprocessing verification data, trimming the at least one first model, and verifying the trimmed at least one first model based on the preprocessed verification data, to obtain the model verification result of each first model.

39. The apparatus according to any one of claims 36 to 38, wherein the step that the processing module performs the model deployment and/or the model update based on the related information of the at least one first model comprises:
determining, based on the verification result, whether to perform the model deployment and/or the model update based on the related information of the at least one first model; and reporting a model deployment or update result to the first device through the second device.

40. The apparatus according to claim 39, wherein the model deployment or update result comprises at least one of the following:
whether the second device has performed the model deployment or update;
related information of a second model, wherein the second model is a model used by the second device to perform the model deployment or update, and the second model belongs to the at least one first model; and
the model verification result.

41. The apparatus according to claim 36 or 38, wherein the step that the processing module performs the model deployment and/or the model update based on the related information of the at least one first model comprises:
reporting the model verification result to the first device;
receiving model deployment or update decision information delivered by the first device, wherein the model deployment or update decision information is determined by the first device based on the model verification result; and
performing the model deployment or the model update based on the model deployment or update decision information.

42. The apparatus according to any one of claims 33 to 41, wherein the second transmission module is further configured to report the model demand information and/or the device state information to the first device.

43. The apparatus according to claim 42, wherein the second transmission module is configured to report the model demand information and/or the device state information to the first device in a case that a second condition is met.

44. The apparatus according to claim 42, wherein the second transmission module is configured to report the model demand information and/or the device state to the first device in a case that a second condition is met and channel quality between the second device and the first device meets a third condition.

45. The apparatus according to claim 43 or 44, wherein the second condition comprises at least one of the following:
a performance degradation of a third model exceeds a first threshold;
a use time of a third model exceeds a second threshold;
the working mode of the second device has changed;
a wireless environment of the second device has changed;
the second device has accessed a network;
a cell handover of the second device occurs;
a function or service related to a third model encounters a failure; and
the second device receives indication information sent by the first device, wherein the indication information indicates the model deployment and/or the model update to the second device,
wherein the third model is a model used by the second device.

46. The apparatus according to any one of claims 33 to 45, wherein the second device comprises a terminal or a network-side device, the first device comprises a terminal or a network-side device.

47. A communication device, comprising a processor and a memory, wherein the memory stores a program or instructions executable on the processor, and the program or instructions, when being executed by the processor, implement the steps of the model configuration method according to any one of claims 1 to 9, or implement the steps of the model configuration method according to any one of claims 10 to 23.

48. A computer storage medium, wherein the computer storage medium stores a program or instructions, and the program or instructions, when being executed by a processor, implement the steps of the model configuration method according to any one of claims 1 to 9, or implement the steps of the model configuration method according to any one of claims 10 to 23.
